# EUROPÄISCHE PATENTSCHRIFT

(11) **EP 2 512 843 B1**
(45) Veröffentlichungstag und Bekanntmachung des Hinweises auf die Patenterteilung: **12.03.2014**
(21) Anmeldenummer: 10792834.3
(22) Anmeldetag: 08.12.2010
(51) Int. Cl.: B60G 7/00

(54) **VORRICHTUNG ZUM VERSTELLEN VON STURZ UND/ODER SPUR DER RÄDER VON RADAUFHÄNGUNGEN**
DEVICE FOR ADJUSTING CAMBER AND/OR TRACKING OF THE WHEELS OF WHEEL SUSPENSIONS
DISPOSITIF POUR RÉGLER LE CARROSSAGE ET/OU LA VOIE DES ROUES DE SUSPENSIONS DE ROUE

(30) Priorität: 16.12.2009 DE 102009058490
(43) Veröffentlichungstag der Anmeldung: 24.10.2012
(73) Patentinhaber: Audi AG, 85045 Ingolstadt (DE)
(72) Erfinder: MICHEL, Wilfried, 93339 Riedenburg (DE); MEITINGER, Karl-Heinz, 81667 München (DE); KOSSIRA, Christoph, 85053 Ingolstadt (DE); MÜLLER, Hugo, 86701 Rohrenfels-Ballersdorf (DE); SCHMID, Wolfgang, 85354 Freising (DE)
(86) Internationale Anmeldenummer: PCT/EP2010/007444
(87) Internationale Veröffentlichungsnummer: WO 2011/072814

(56) Entgegenhaltungen:
- WO-A1-98/16418
- DE-A1-102008 011 367
- JP-A- 2007 261 555

## Beschreibung

Die Erfindung betrifft eine Vorrichtung zum Verstellen von Sturz und/oder Spur der Räder von Radaufhängungen, insbesondere für Kraftfahrzeuge, gemäß dem Oberbegriff des Patentanspruches 1.

Eine gattungsgemäße Vorrichtung ist in der DE 10 2008 011 367 A1 beschrieben, bei der der Sturz und/oder die Spur der Räder im Fahrbetrieb über in den Radträger integrierte Stellzylinder verstellbar ist. Der Radträger ist dabei in ein das Rad aufnehmendes Trägerteil und ein an Radaufhängungselementen angelenktes Führungsteil unterteilt, die durch Verdrehung eines oder beider Stellzylinder über Elektromotoren und durch Stirnzahnräder gebildete Stelltriebe das Trägerteil relativ zum Führungsteil verschwenken. Die Verstellung wird dabei dadurch bewirkt, dass die rotationssymmetrischen Stellzylinder eine gemeinsame Drehachse und dazu geneigte Schrägflächen oder Drehlagerungen aufweisen, die bei Verdrehung der Stellzylinder gleichsinnig oder gegensinnig ein entsprechendes Verschwenken des Trägerteiles um bis zu 5° Spur- und/oder Sturzwinkel ermöglichen.

Aufgabe der Erfindung ist es, die Vorrichtung der gattungsgemäßen Art derart weiterzubilden, dass bei einer bauraumgünstigen Anordnung eine einfache, spielfreie Verstellung von Sturz und/oder Spur der Räder ermöglicht ist.

Diese Aufgabe wird erfindungsgemäß mit den Merkmalen des Patentanspruches 1 gelöst. Vorteilhafte Weiterbildungen der Erfindung beschreiben die Unteransprüche.

Gemäß dem kennzeichnenden Teil des Patentanspruches 1 ist das Trägerteil und das Führungsteil mittels einer kardanischen Gelenkverbindung mit jeweils einer Gelenkgabel und einem diese über Lagerzapfen verbindenden Stützring gekoppelt. Die Gelenkverbindung bildet eine Verdrehsicherung zwischen dem Führungsteil und dem Trägerteil, wodurch eine Übertragung von Momenten, etwa Bremsmomenten, zum Fahrzeug ermöglicht ist. Erfindungsgemäß ist der Stellmotor durch einen Umschlingungstrieb mit dem Stellelement verbunden. Der Umschlingungstrieb verläuft durch einen Zwischenraum der Gelenkgabeln.

Erfindungsgemäß ist der Stellmotor daher radial außerhalb des Kardangelenkes angeordnet. Zur trieblichen Verbindung mit dem Stellelement ist der Stellmotor mittels des Umschlingungstriebes mit dem innerhalb des Kardangelenkes angeordneten Stellelement verbunden. Der Umschlingungstrieb ist im Vergleich zu einem Zahnradtrieb besonders vorteilhaft. Bei einem solchen Zahnradtrieb ist nämlich das Antriebszahnrad des Stellmotors aufgrund von Bauraumbegrenzungen durch ein zusätzliches Zwischenzahnrad mit einem Zahnkranz des Stellelementes zu verbinden. Das Zwischenzahnrad ist zur Überbrückung des Zwischenraums zwischen den Gelenkgabeln erforderlich, da die Größe des Zahnkranzes am Stellelement durch die lichte Weite der Kardangabeln begrenzt ist und nicht radial so weit ausgeweitet werden kann, bis ein unmittelbarer Eingriff ohne zusätzlichem Zwischenzahnrad ermöglicht ist. Der erfindungsgemäß eingesetzte Umschlingungstrieb ist auch im Hinblick auf eine Teilereduzierung sowie im Hinblick auf eine höhere Dynamik vorteilhaft, da die Drehmasse des ansonsten erforderlichen Zwischenzahnrades nicht beschleunigt werden muss. Zusätzliche Vorteile des Umschlingungstriebes bestehen in der größeren Laufruhe, der einfacheren Montage sowie einer Gewichtsersparnis.

Gemäß einer Ausführungsform weist das Stellelement zwei zueinander verdrehbare, über Schrägflächen zusammenwirkende Drehteile auf. Durch Verdrehen eines oder beider Drehteile mittels Stellmotoren kann das Trägerteil und damit das Fahrzeugrad über vorgebbare Spur- und/oder Sturzwinkel verstellt werden. Bevorzugt kann jedem dieser Drehteile ein eigener Stellmotor zugeordnet werden. Deren Umschlingungstriebe können durch in Umfangsrichtung zueinander versetzte Zwischenräume der Gelenkgabeln verlaufen, wodurch insgesamt eine kompakte Anordnung bereitgestellt ist. Entsprechend können auch die Stellmotoren der Drehteile in Umfangsrichtung zueinander versetzt angeordnet sein.

Der Umschlingungstrieb kann mit einem Zahnrad auf dem Stellelement, einem Antriebszahnrad an dem Stellmotor und einem diese trieblich verbindenden Zugmittel gebildet sein. Die Zugmittel, zum Beispiel eine Kette, ermöglichen zusätzliche, konstruktive Freiheitsgrade sowohl in der Übersetzungsauslegung des Umschlingungstriebes, als auch bei der Anordnung der die Stellzylinder betätigenden Elektromotoren unter Berücksichtigung der übrigen Einbauten und Radaufhängungsteile im Bereich des Radträgers.

Besonders bevorzugt können ferner die Zahnräder Zahnriemenräder und das Zugmittel ein Zahnriemen sein. Der besondere Vorteil liegt darin, dass keine Schmiermittel im Zahnriementrieb erforderlich sind und dass eine geräuschlose Verstellung der Drehteile gegeben ist. Bei entsprechender Vorspannung des Zahnriemens ist zudem eine spielfreie Übertragung der Stellbewegungen zwischen den Elektromotoren und den korrespondierenden Drehteilen sichergestellt.

Des Weiteren können zur Erhöhung der Antriebssicherheit eines oder beide Zahnriemenräder mit seitlichen Führungsborden versehen sein.

Die kardanische Gelenkverbindung dient als Verdrehsicherung und Momentenabstützung zwischen dem Trägerteil und dem Führungsteil. Schließlich können in den Stellmotoren im nicht aktivierten Zustand wirksame Reibungsbremsen oder Drehsicherungen vorgesehen sein, die eine unbeabsichtigte, selbsttätige Verstellung den die Spur- und oder Sturzeinstellung des Rades bestimmenden Drehteile aufgrund von statischen oder dynamischen Radlasten ausschließen.

Ein Ausführungsbeispiel der Erfindung ist im Folgenden mit weiteren Einzelheiten näher erläutert. Die schematische Zeichnung zeigt in:
- **Fig. 1**: ein Prinzipbild der Vorrichtung zum Verstellen von Spur- und Sturzwinkel einer Radaufhängung für Kraftfahrzeuge mit einem mehrteiligen Radträger;
- **Fig. 2**: die Vorrichtung gemäß der **Fig.** 1 mit Darstellung der kardanischen Verbindung zwischen dem Führungsteil und dem Trägerteil des Radträgers;
- **Fig. 3**: die Vorrichtung gemäß den **Fig. 1 und 2** in einer gegenständlichen Ausführung, mit einem ein Rad tragendes Trägerteil, einem an Radführungselementen der Radaufhängung angelenkten Führungsteil und mit zwei verdrehbaren Drehteilen, die über Elektromotoren und Zahnriementriebe verstellbar sind; und
- **Fig.4**: die Vorrichtung gemäß der **Fig. 3** in einer raumbildlichen Darstellung eines der auf die Drehteile wirkenden Zahnriementriebe.

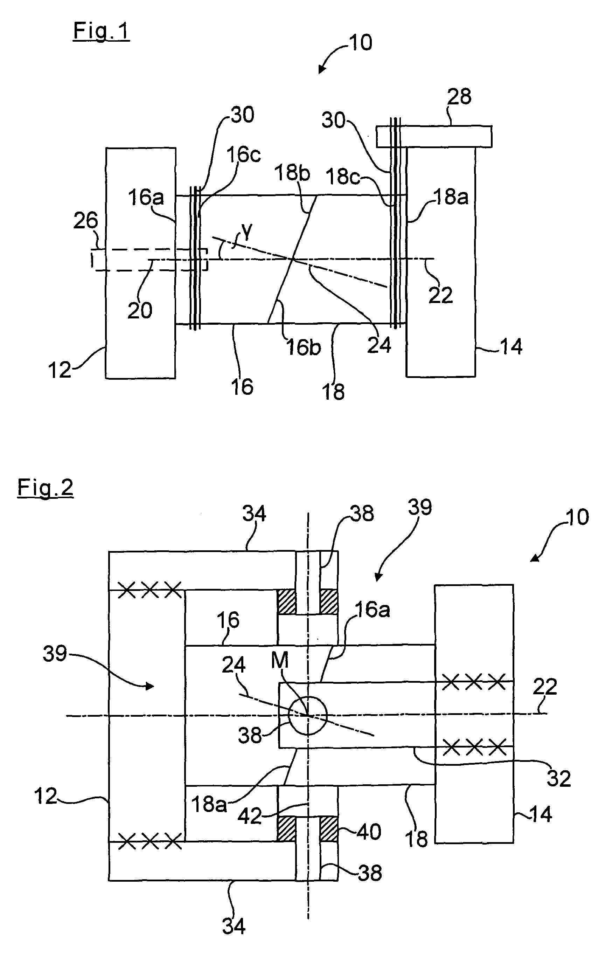

Die **Fig. 1** zeigt zur theoretischen Erläuterung der Erfindung als grobes Prinzipbild ein Radführungselement bzw. einen Radträger 10 einer Radaufhängung für Kraftfahrzeuge, der zur Verstellung des Sturzes und/oder der Spur des Rades im Bereich der Radlagerung wie folgt unterteilt ist:

Der Radträger 10 weist ein Trägerteil 12 auf, in dem das Rad und das Bremselement (Bremsscheibe, Bremstrommel) einer Betriebsbremse des Kraftfahrzeuges drehbar gelagert ist. Es sei bemerkt, dass soweit nicht beschrieben die Funktionsteile der Radaufhängung bekannter Bauart sein können.

Ferner weist der Radträger 10 ein Führungsteil 14 auf, das mit der Radaufhängung zusammenwirkt bzw. gegebenenfalls einen Teil der Radaufhängung bildet.

Zwischen dem Trägerteil 12 und dem Führungsteil 14 sind als Stellelemente zwei im wesentlichen rotationssymmetrische Drehteile 16, 18 vorgesehen, die jeweils über Drehachsen 20, 22 verdrehbar mit dem Trägerteil 12 bzw. dem Führungsteil 14 verbunden sind. Die beiden Drehachsen 20, 22 sind in der Fig. 1 koaxial ausgerichtet.

Während die dem Trägerteil 12 und dem Führungsteil 14 unmittelbar benachbarten Anlaufflächen 16a, 18a der Drehteile 16, 18 rotationssymmetrisch ausgeführt sind, liegen die Drehteile 16, 18 über plane oder kegelige Schrägflächen 16b, 18b aneinander an und sind über Drehachsen 24 verdrehbar miteinander verbunden. Die Drehachsen 24 sind dabei wie ersichtlich senkrecht zu den Schrägflächen 16b, 18b und in einem definierten Winkel γ zu den Drehachsen 20, 22 geneigt ausgerichtet.

Am Trägerteil 12 und am Führungsteil 14 ist jeweils ein elektrischer Stellmotor 26, 28 noch zu beschreibender Anordnung vorgesehen, die mit den Drehteilen 16, 18 über Zahnriementriebe 30 trieblich verbunden sind. Mittels der Stellmotoren 26, 28 können die Drehteile 16, 18 gleichsinnig oder gegensinnig in beide Drehrichtungen verdreht werden, wodurch das Trägerteil 12 relativ zum Führungsteil 14 eine Schwenkbewegung oder eine Taumelbewegung ausführend den Spurwinkel und/oder den Sturzwinkel des Rades entsprechend verändert.

Die **Fig. 2** zeigt skizzenhaft eine kardanische Kopplung zwischen dem Führungsteil 14 und dem Trägerteil 12, die unter anderem als Verdrehsicherung und Momentenabstützung zum Beispiel für am Trägerteil 12 wirkende Bremsmomente und Antriebsmomente dient.

Dazu sind an dem Führungsteil 14 und an dem Trägerteil 12 Gelenkgabeln 32, 34 befestigt, die um 90° zueinander versetzt sind und über einheitlich mit 38 bezeichnete Lagerbolzen und einen Stützring 40 miteinander verbunden sind. Das Trägerteil 12 kann somit kardanisch um eine senkrechte Achse 42 und um eine zur Zeichnungsebene rechtwinklige Achse verschwenkt werden, wobei der Momentanpol M der kardanischen Verbindung, wie ersichtlich ist, die Drehachse 22 und die schräge Drehachse 24 der Drehteile 16, 18 schneidet.

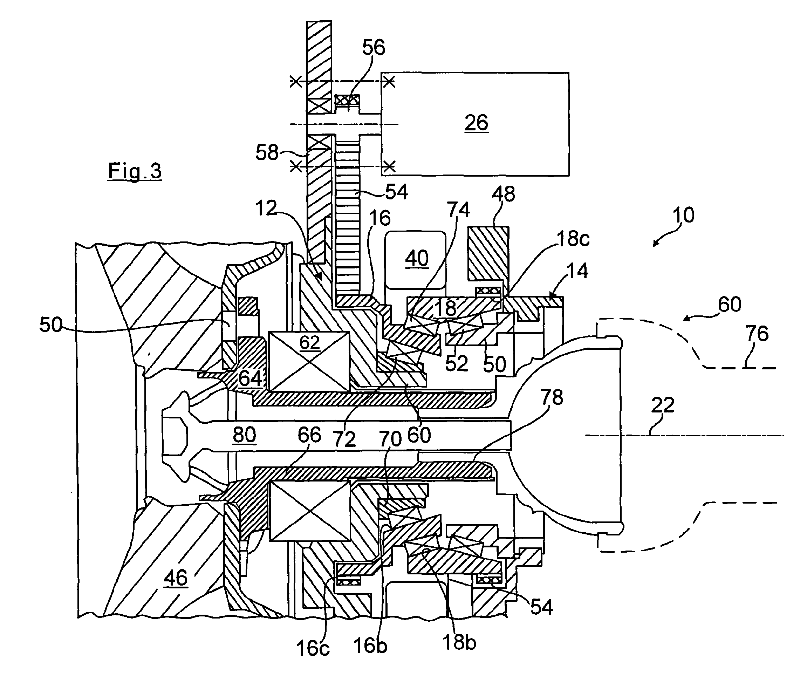

Die **Fig. 3** zeigt in einem teilweisen Längsschnitt entlang der Drehachse 22 des Rades der Radaufhängung den Radträger 10 in konstruktiver Ausführung, wobei sich die Beschreibung auf die erfindungswesentlichen Bauteile beschränkt. Funktionell gleiche Teile sind mit gleichen Bezugszeichen versehen.

Der Radträger 10 setzt sich, wie vorstehend beschrieben, aus dem mit Radführungselementen der Radaufhängung wie Lenkern, etc. gelenkig verbundenem Führungsteil 14, dem das Rad (Felge 46) tragenden Trägerteil 12 und den Drehteilen 16, 18 zusammen.

Das Führungsteil 14 weist einen Tragflansch 48 auf, der einen radial innenliegenden Lagerring 50 trägt. Der Lagerring 50 bildet über Lagerrollen 52 mit dem radial außenliegenden Drehteil 18 eine erste Rollenlagerung, deren Drehachse mit der Drehachse 22 zusammenfällt.

Das Drehteil 18 ist an seinem Außenumfang mit einem Zahnriemenrad 18c versehen, das über einen Zahnriemen 54 mit einem in der **Fig. 3** nicht ersichtlichen, antreibenden Zahnriemenrad 56 des Elektromotors 28 trieblich zusammenwirkt. Der Elektromotor 28 ist ebenfalls an der Tragplatte 48 des Führungsteiles 14 befestigt.

Das Trägerteil 12 weist einen radial ausgerichteten Flanschabschnitt 58 und einen axial verlaufenden Nabenabschnitt 60 auf. Der Nabenabschnitt 60 erstreckt sich radial innerhalb der beiden Drehteile 16, 18 in Richtung auf den Lagerring 50 der Tragplatte 48.

Innerhalb des Flanschabschnittes 58 ist ein zweireihiges Radlager 62 als Drehlager für einen Radflansch 64 mit einem axial in den Nabenabschnitt 60 bis etwa zum Lagerring 50 einragenden Nabenabschnitt 66 vorgesehen.

An dem Radflansch 64 sind mittels Radschrauben (nicht dargestellt) das Rad bzw. die Felge 46 und die Bremsscheibe einer Scheibenbremse befestigt. Der Bremssattel der Scheibenbremse ist in nicht ersichtlicher Weise an dem Flanschabschnitt 58 des Trägerteiles 12 befestigt.

Des weiteren ist auf dem Nabenabschnitt 60 des Trägerteiles 12 über einen Lagerinnenring 70 und Lagerrollen 72 das Drehteil 16 drehbar gelagert, wobei dessen Drehachse 24 (nur in der **Fig. 1****)** gezeigt gegenüber der Raddrehachse 22 geneigt ist.

Ferner ist das Drehteil 16 über ein drittes Rollenlager mit Lagerrollen 74 in dem Drehteil 18 verdrehbar gelagert. Dabei sind die relevanten Schrägflächen 16b, 18b bzw. die Kegelwinkel der Drehteile 16, 18 derart unterschiedlich und schräg zur Drehachse 22 ausgeführt, dass durch deren Verdrehung das Trägerteil 12 relativ zum Führungsteil 14 bzw. der Sturzwinkel und/oder der Spurwinkel des Rades der Radaufhängung im Bereich von ca. 5° aus einer Neutralstellung heraus verstellbar sind.

Das Drehteil 16 weist ebenfalls ein angeformtes Zahnriemenrad 16c auf und wird über einen weiteren Zahnriemen 54 und ein Zahnriemenrad 56 des Elektromotors 26 verstellt. Der Elektromotor 26 ist an dem Flanschabschnitt 58 des Trägerteiles 12 befestigt.

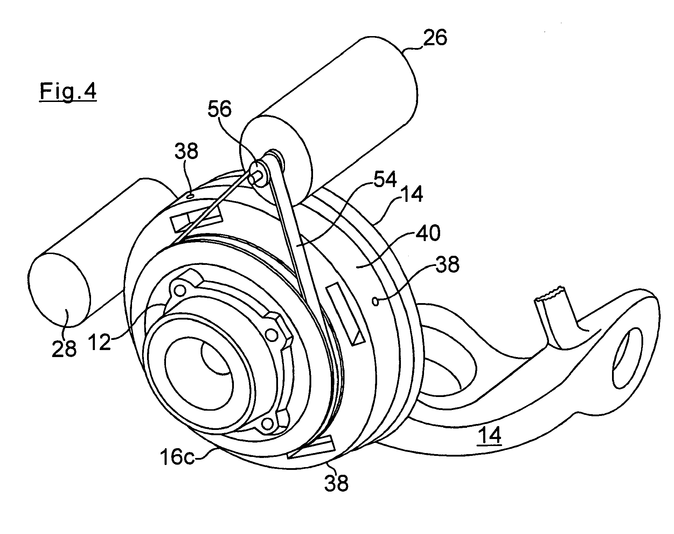

Die **Fig. 4** zeigt stellvertretend für beide Zahnriementriebe 30 den Zahnriementrieb 30 zur Verstellung des Trägerteiles 12 über das Drehteil 16, wobei der Zahnriemen 54 wie ersichtlich das relativ kleine Zahnriemenrad 56 auf der Antriebswelle des Elektromotors 26 und das relativ große Zahnriemenrad 16c entsprechend umschlingt. Der Zahnriementrieb 30 zur Verstellung des Drehteils 18 ist spiegelbildlich gleich ausgeführt.

An den Zahnriemenrädern 16c und 56 sind beiderseits den Zahnriemen axial führende Borde (ohne Bezugszeichen) vorgesehen.

Die Elektromotoren 26, 28 sind um ca. 90° zueinander umfangsversetzt so angeordnet, dass sich die korrespondierenden Zahnriemen 54 der Zahnriementriebe 30 jeweils zwischen den Gelenkgabeln 32, 34 des Führungsteiles 14 und des Trägerteiles 12 erstrecken können (vergleiche in der **Fig. 4** die eingezeichneten Lagerbolzen 38 des Stützringes 40, die die nicht ersichtliche Position der Gelenkgabeln 32, 34 bestimmen).

Die Elektromotoren 26, 28 sind in an sich bekannter Weise mit formschlüssig oder reibschlüssig wirkenden Bremseinrichtungen versehen, die bei nicht aktivierten Elektromotoren 26, 28 wirksam sind und eine unbeabsichtigte Verstellung der Drehteile 16, 18 zuverlässig ausschließen.

Die antreibenden Zahnriemenräder 56 können an den Elektromotoren 26, 28 auf deren Antriebswelle fliegend gelagert sein, oder wie in **Fig.** 3 anhand des Elektromotors 26 dargestellt in dem jeweiligen Tragflansch 58, 48 zusätzlich gelagert sein.

Sofern das Rad der Radaufhängung über eine Gelenkwelle 76 angetrieben ist, kann diese wie in **Fig. 3** dargestellt über eine Steckverzahnung 78 in dem Nabenabschnitt 66 und mittels einer Spannschraube 80 trieblich mit dem Radflansch 64 verbunden sein.

Anstelle der beschriebenen Zahnriementriebe 30 können auch Kettentriebe mit entsprechend ausgeführten Kettenrädern und einer Kette als Umschlingungsmittel eingesetzt sein.

**Bezugszeichen**

| | | | |
|---|---|---|---|
| 10 | Radträger | 70 | Lagerinnenring |
| 12 | Trägerteil | 72 | Lagerrollen |
| 14 | Führungsteil | 74 | Lagerrollen |
| 16, 18 | Drehteile | | |
| 16a, 18a | Anlaufflächen | | |
| 16b, 18b, | Schrägflächen | | |
| 16c, 18c | Zahnriemenräder | | |
| 20, 22, 24 | Drehachsen | | |
| 26, 28 | Stellmotoren | | |
| 30 | Zahnriementriebe | | |
| 32, 34 | Gelenkgabeln | | |
| 38 | Lagerbolzen | | |
| 40 | Stützring | | |
| 42 | Achse | | |
| 46 | Felge | | |
| 48 | Tragflansch | | |
| 50 | Lagerring | | |
| 52 | Lagerrollen | | |
| 56 | Zahnriemenrad | | |
| 58 | Flanschabschnitt | | |
| 60 | Nabenabschnitt | | |
| 62 | Radlager | | |
| 64 | Radflansch | | |
| 66 | Nabenabschnitt | | |

## Patentansprüche

1. Vorrichtung zum Verstellen von Sturz und/oder Spur eines Fahrzeugrades mit einem Radträger (10), an dem das Rad drehbar gelagert ist, wobei das Radführungselement (10) ein das Rad aufnehmendes Trägerteil (12), ein achsseitiges Führungsteil (14) sowie zumindest ein dazwischen angeordnetes Stellelement (16, 18) zum Verstellen von Sturz und/oder Spur des Fahrzeugrads aufweist, welches Stellelement (16, 18) mit zumindest einem Stellmotor (26, 28) trieblich verbunden ist, **dadurch gekennzeichnet, dass** das Trägerteil (12) und das Führungsteil (14) mittels einer kardanischen Gelenkverbindung mit jeweils einer Gelenkgabel (32, 34) und einem diese über Lagerzapfen (38) verbindenden Stützring (40) gekoppelt sind, und dass der Stellmotor (26, 28) durch einen Umschlingungstrieb (30) mit dem Stellelement (16, 18) verbunden ist, der durch einen Zwischenraum (39) der Gelenkgabeln (32, 34) verläuft.

2. Vorrichtung nach Anspruch 1, **dadurch gekennzeichnet, dass** der Umschlingungstrieb (30) mit jeweils einem Zahnrad (16c, 18c) auf dem Stellelement (16, 18), einem Antriebszahnrad (56) an dem Stellmotor (26, 28) und einem Zugmittel (54) gebildet ist, insbesondere ein Zahnriemen oder eine Kette.

3. Vorrichtung nach Anspruch 2, **dadurch gekennzeichnet, dass** bei einer Ausgestaltung des Zugmittels (54) als Zahnriemen die Zahnräder als Zahnriemenräder (16c, 18c, 56) ausgebildet sind, oder bei einer Ausgestaltung des Zugmittels (54) als Kette die Zahnräder als Kettenräder ausgebildet sind.

4. Vorrichtung nach Anspruch 3, **dadurch gekennzeichnet, dass** eines oder beide Zahnriemenräder (16c, 18c, 56) des Zahnriementriebes (30) mit seitlichen Führungsborden versehen sind.

5. Vorrichtung nach einem der Ansprüche 1 bis 4, **dadurch gekennzeichnet, dass** das Stellelement (16, 18) aus zwei zueinander verdrehbaren, über Schrägflächen (16b, 18b) zusammenwirkende Drehteilen (16, 18) gebildet ist, und insbesondere jedem der Drehteile (16, 18) ein Stellmotor (26, 28) zugeordnet ist.

6. Vorrichtung nach Anspruch 5, **dadurch gekennzeichnet, dass** die Umschlingungstriebe (30) der beiden Stellmotoren (26, 28) durch in Umfangsrichtung zueinander versetzte Zwischenräume (39) der Gelenkgabeln (32, 34) verlaufen.

7. Vorrichtung nach Anspruch 6, **dadurch gekennzeichnet, dass** die Stellmotoren (26, 28) der Drehteile (16, 18) in Umfangsrichtung zueinander versetzt angeordnet sind.

8. Vorrichtung nach einem der vorhergehenden Ansprüche, **dadurch gekennzeichnet, dass** bei Umschlingungstrieben (30) beider Drehteile (16, 18) die Zugmittel (54) der zueinander umfangsversetzten Stellmotoren (26, 28) jeweils durch einander benachbarte Zwischenräume (39) der Gelenkgabeln (32, 34) der kardanischen Verbindung verlaufen.

9. Vorrichtung nach einem der vorhergehenden Ansprüche, **dadurch gekennzeichnet, dass** in den Stellmotoren (26, 28) im nicht aktivierten Zustand wirksame Reibungsbremsen oder Drehsicherungen vorgesehen sind.

## Claims

1. Device for adjusting camber and/or toe of a vehicle wheel, comprising a wheel carrier (10) on which the vehicle wheel is rotatably mounted, the wheel guide element (10) having a carrier part (12) which receives the wheel, an axle-side guide part (14) and at least one adjustment element (16, 18) arranged therebetween for adjusting camber and/or toe of the vehicle wheel, which adjustment element (16, 18) is drivingly connected to at least one servomotor (26, 28), **characterised in that** the carrier part (12) and the guide part (14) are each coupled to an articulated fork (32, 34) by means of a Cardan joint and to a supporting ring (40) which connects said articulated forks via bearing pins (38), and **in that** the servomotor (26, 28) is connected to the adjustment element (16, 18) by a belt drive (30) extending through an intermediate space (39) of the articulated forks (32, 34).

2. Device according to claim 1, **characterised in that** the belt drive (30) is formed in each case having a gear (16c, 18c) on the adjustment element (16, 18), a drive gear (56) on the servomotor (26, 28), and a traction means (54), in particular a toothed belt or a chain.

3. Device according to claim 2, **characterised in that** when the traction means (54) is configured as a toothed belt, the gears are formed as toothed pulleys (16c, 18c, 56), or when the traction means (54) is configured as a chain, the gears are formed as sprockets.

4. Device according to claim 3, **characterised in that** one or both of the toothed pulleys (16c, 18c, 56) of the toothed belt drive (30) are provided with lateral guide flanges.

5. Device according to any of claims 1 to 4, **characterised in that** the adjustment element (16, 18) is formed from two rotary parts (16, 18) which rotate with respect to one another and interact via inclined surfaces (16b, 18b), and in particular a servomotor (26, 28) is assigned to each of the rotary parts (16, 18).

6. Device according to claim 5, **characterised in that** the belt drives (30) of the two servomotors (26, 28) extend through intermediate spaces (39) of the articulated forks (32, 34), which intermediate spaces are mutually offset in the circumferential direction.

7. Device according to claim 6, **characterised in that** the servomotors (26, 28) of the rotary parts (16, 18) are arranged with a mutual circumferential offset.

8. Device according to any of the preceding claims, **characterised in that**, in the belt drives (30) of the two rotary parts (16, 18), the traction means (54) of the servomotors (26, 28) having a mutual circumferential offset each extend through adjacent intermediate spaces (39) of the articulated forks (32, 34) of the Cardan joint.

9. Device according to any of the preceding claims, **characterised in that** friction brakes or rotation locks, which are effective in the inactivated state, are provided in the servomotors (26, 28).

## Revendications

1. Dispositif de réglage du carrossage et/ou de l'écartement d'un véhicule automobile avec un support de roue (10), sur lequel la roue est montée à rotation, dans lequel l'élément guide-roue (10) présente une pièce de support (12) recevant la roue, une pièce de guidage côté essieu (14) ainsi qu'au moins un élément de réglage (16, 18) aménagé entre elles pour régler le carrossage et/ou l'écartement de la roue de véhicule, lequel élément de réglage (16, 18) est lié à au moins un servomoteur (26, 28) en mode moteur, **caractérisé en ce que** la pièce de support (12) et la pièce de guidage (14) sont couplées au moyen d'une articulation à la Cardan à respectivement un étrier articulé (32, 34) et à une bague d'appui (40) reliant celles-ci via des tourillons (38) et **en ce que** le servomoteur (26, 28) est relié via une transmission à enroulement (30) à l'élément de réglage (16, 18) qui s'étend à travers un espace intermédiaire (39) des étriers articulés (32, 34).

2. Dispositif selon la revendication 1, **caractérisé en ce que** la transmission à enroulement (30) est formée respectivement d'une roue dentée (16c, 18c) sur l'élément de réglage (16, 18), d'une roue dentée menante (56) sur le servomoteur (26, 28) et d'un moyen de traction (54), en particulier une courroie dentée ou une chaîne.

3. Dispositif selon la revendication 2, **caractérisé en ce que**, lorsque le moyen de traction (54) se présente sous la forme d'une courroie dentée, les roues dentées se présentent sous la forme de roues de courroie dentée (16c, 18c, 56) ou, lorsque le moyen de traction (54) se présente sous la forme d'une chaîne, les roues dentées se présentent sous la forme de roues à chaîne.

4. Dispositif selon la revendication 3, **caractérisé en ce que** l'une des roues de courroie dentée (16c, 18c, 56) ou les deux de la transmission à courroie dentée (30) est ou sont pourvues de bords de guidage latéraux.

5. Dispositif selon l'une quelconque des revendications 1 à 4, **caractérisé en ce que** l'élément de réglage (16, 18) est formé de deux pièces rotatives (16, 18) à torsion mutuelle coopérant via des surfaces inclinées (16b, 18b) et, en particulier, un servomoteur (26, 28) est affecté à chacune des pièces rotatives (16, 18).

6. Dispositif selon la revendication 5, **caractérisé en ce que** les transmissions à enroulement (30) des deux servomoteurs (26, 28) s'étendent à travers des espaces intermédiaires (39) des étriers articulés (32, 34) décalés l'un de l'autre dans la direction circonférentielle.

7. Dispositif selon la revendication 6, **caractérisé en ce que** les servomoteurs (26, 28) des pièces rotatives (16, 18) sont aménagés décalés l'un de l'autre dans la direction circonférentielle.

8. Dispositif selon 'l'une quelconque des revendications précédentes, **caractérisé en ce que**, dans les transmissions à enroulement (30) des deux pièces rotatives (16, 18), les moyens de traction (54) des servomoteurs (26, 28) décalés l'un de l'autre sur la circonférence s'étendent respectivement à travers des espaces intermédiaires (39) des étriers articulés (32, 34) de la liaison à la Cardan voisins l'un de l'autre.

9. Dispositif selon l'une quelconque des revendications précédentes, **caractérisé en ce qu'**il est prévu dans les servomoteurs (26, 28) des freins à friction ou des sécurités anti-torsion efficaces à l'état non activé.
